# EUROPEAN PATENT SPECIFICATION

(11) **EP 4 123 454 B1**
(45) Date of publication and mention of the grant of the patent: **09.12.2026**
(21) Application number: 21186977.1
(22) Date of filing: 21.07.2021
(51) Int. Cl.: G06F 11/00, G05B 19/042

(54) **VALIDATING COMPONENT SPECIFICATIONS FOR INDUSTRIAL AUTOMATION SYSTEMS**
VALIDIERUNG VON KOMPONENTENSPEZIFIKATIONEN FÜR INDUSTRIELLE AUTOMATISIERUNGSSYSTEME
VALIDATION DE SPÉCIFICATIONS DE COMPOSANTS POUR SYSTÈMES D'AUTOMATISATION INDUSTRIELLE

(43) Date of publication of application: 25.01.2023
(73) Proprietor: ABB SCHWEIZ AG, 5400 Baden (CH)
(72) Inventor: SARKAR, Santonu, 560076 Bangalore, Karnataka (IN); HOERNICKE, Mario, 76829 Landau (DE); STARK, Katharina, 69469 Weinheim (DE)
(74) Representative: Maiwald GmbH

(56) References cited:
- EP-A1- 2 772 877
- ANANIEVA SOFIA ET AL: "Model-Driven Consistency Preservation in AutomationML", 2018 IEEE 14TH INTERNATIONAL CONFERENCE ON AUTOMATION SCIENCE AND ENGINEERING (CASE), IEEE, 20 August 2018 (2018-08-20), pages 1536 - 1541, XP033463103, DOI: 10.1109/COASE.2018.8560343

## Description

### FIELD OF THE INVENTION

The invention relates to a system and method for validating a module specification defining a module for an industrial automation system.

### BACKGROUND

Modular plants are designed during an engineering phase by composing a set of predesigned modules possibly created by different vendors, defining a plant topology in terms of these modules, and generating control code for the process orchestration layer (POL). Design and integration tools may be used during the engineering phase to import module specifications, for example in the form of module type packages (MTPs), and to integrate them into the design. Integration of the MTPs can often fail without sufficient failure details being provided, requiring an engineer to spend time on debugging and fixing errors with the MTPs. As a consequence, the engineering effort involved during POL engineering can be increased by problems with the MTPs. Moreover, if an MTP is from a third party vendor, the integration may be stalled for an indefinite period until the problem is fixed by the vendor. Additionally, if a semantically incorrect MTP is allowed to be integrated with other components, the entire automation system can fail during site acceptance testing (SAT).

Document EP 2 772 877 A1 relates to a method and a system for automated detection of inconsistencies in a plant model during a design and engineering phase.

The paper "Ananieva, S.; et al.: Model-Driven Consistency Preservation in AutomationML. 2018 IEEE 14th International Conference on Automation Science and Engineering (CASE), 20 August 2018" discusses different kinds of consistency constraints related to Industrial Automation Systems.

### SUMMARY

It would be advantageous to validate module specifications before integrating them into an industrial automation system. To better address one or more of these concerns, in a first aspect of invention there is provided a computer-implemented method for validating a component specification defining at least one component of an industrial automation system according to claim 1.

The invention is defined by the independent claims.

Optional features are defined by the appended dependent claims.

At least one of the invariants may relate to semantic correctness of the component specification, wherein validating the component specification comprises using the said at least one invariant to validate semantic correctness of the component specification. Semantic correctness may be validated with reference to the IEC 63280 specification, for example, and/or with reference to a model of that specification.

Additionally or alternatively, at least one of the invariants may relate to structural correctness of the component specification, and wherein validating the component specification comprises using the said at least one invariant to validate structural correctness of the component specification. Structural correctness may be validated with reference to the CAEX specification, for example, and/or with reference to a metamodel of that specification.

Additionally or alternatively, the component specification may comprise at least one equipment classification identifier, wherein validating the component specification comprises validating the at least one equipment classification identifier. Validating the at least one equipment classification identifier may comprise determining the validity of the equipment classification identifier with reference to an external agency. The equipment classification identifier may comprise an eClass ID, and the external agency may comprise an eClass portal.

Additionally or alternatively, at least one of the variants is defined with reference to a model or metamodel representing a relevant standard specification, and wherein validating the component specification comprises performing the validation with reference to the model or metamodel.

The invariants may any one or more of the following: class hierarchies; instance properties; reference IDs; value consistency constraints; compatibility of connected elements; structural constraints.

The invariants may be expressed in any appropriate manner. In one example, at least one of the invariants is expressed using one or more first-order logic-based constraints.

The validation may be performed in any appropriate manner, In one example, at least one said invariant comprises an assertion, and wherein validating the component specification comprises determining whether the assertion is violated. Additionally or alternatively, at least one said invariant comprises a regular expression, and wherein validating the component specification comprises using the regular expression to detect a wanted or unwanted pattern in the component specification. Additionally or alternatively, at least one said invariant comprises a formula, and wherein validating the component specification comprises using a solver to determine whether the formula is satisfied by the component specification. Additionally or alternatively, validating the component specification may comprise using a graph transformation algorithm to model the component specification as a representative graph, and validating the representative graph with reference to an idealised model graph obtained from a model repository. Additionally or alternatively, the method may further comprise obtaining data relating to compatibility of elements in the component specification, wherein validating the component specification comprises determining compatibility of elements in the component specification using the obtained data. In that case, the method may further comprise using a clustering algorithm to obtain the data relating to compatibility of elements in the component specification. Additionally or alternatively, the method may further comprise compiling the invariant specification to generate at least one executable rule for validation, wherein validating the component specification comprises executing the at least one executable rule. In that case, the at least one executable rule may model the negation of a said invariant, and wherein validating the component specification comprises detecting a violation in response to the firing of the said at least one executable rule.

The method may further comprise, in response to detecting a validation error when validating the component specification, recommending one or more remedial actions to remedy the validation error. In one example, the remedial action comprises at least one generic corrective suggestion. Additionally or alternatively, the remedial action may comprise at least one context-specific corrective suggestion. The method may further comprise sending at least one of the recommended remedial actions to a user and receiving user feedback relating to the at least one recommended remedial action. The method may further comprise using the received feedback to determine subsequent recommendations of remedial action for the same validation error. The method may further comprise using a reinforcement learning approach to improve subsequent recommendations.

By "component specification" is meant any file or dataset defining at least one component, in particular a module, for an industrial automation system. The component specification may thus comprise a module specification, defining in particular the interface between the module and other components of the automation system. In one example, the module specification is a module type package (MTP). However, it is to be understood that the methods and systems described herein are not so limited and that they can be applied to component specifications arranged in any object-oriented data format. The component specification may adhere for example to the CAEX format.

By "invariant" is meant a design rule or design constraint (OCL) which can be described using a specification language. The specification language may be a custom specification language as described herein.

By undergoing a rigorous validation, an imported MTP is less likely to cause failure during integration and subsequent testing. The invariant specification provides a defined schema against which the MTP may be validated and which is not currently provided by the available standards. In particular, the invariants may be used to enforce semantic correctness of the MTP alongside its structural correctness, an ability which is not provided by current design and integration tools, nor by the CAEX standard (IEC 62424), to which the MTP complies, which is mostly structural.

The validation systems and methods according to the present disclosure thus provide for more effective error detection during early engineering phases, which in turn reduces the integration and testing effort, while providing for faster turnaround time in modular plant design, improved reusability interoperability standardization of modules. Developer productivity may also be improved.

By decoupling the 2658 specification as well as the CAEX specification from the invariant validation engine, any changes in the specification will not impact the invariant validation engine.

By decoupling the 2658 specification as well as the CAEX specification from the invariant validation engine, one can replace the 2658 specification with any other object-oriented specification, such as the OPC-UA information model specification (https://opcfoundation.org/). In such a non-limiting scenario, the invariant validation engine can validate semantic correctness of an OPC-UA component description by suitably changing the invariants.

Connecting the invariant validation engine to an external validation agency such as an eClass portal allows a deeper semantic validation of the MTP to be performed.

The use of domain-specific equipment clustering (e.g., for VDI-2658 elements) allows certain semantic design errors that violate P&ID constraints to be caught.

The use of a reinforcement learning system provides for increasingly accurate MTP validation.

According to a second aspect, there is provided a method of configuring an industrial automation system. The method comprises: validating a component specification for the industrial automation system using the method of the first aspect; and configuring the industrial automation system to operate using the component as defined by the validated component specification. The method may further comprise operating the so-configured industrial automation system so as to carrying out a predetermined industrial process for manufacturing a given product.

According to a third aspect, there is provided an industrial automation system configured using the method of the third aspect.

According to a fourth aspect, there is provided a system configured to allow a user to define the invariants and to create the invariant specification as disclosed herein.

According to a fifth aspect, there is provided a method of creating an invariant specification, the method comprising receiving definitions of invariants from a user, and creating the invariant specification as disclosed herein on the basis of the received definitions.

According to an sixth aspect, there is provided a validation system configured to perform the method of the first aspect.

According to a seventh aspect, there is provided a computing device comprising a processor configured to perform the method of the first or second aspect.

According to an eighth aspect, there is provided a computer program product comprising instructions which, when executed by a computing device, enable or cause the computing device to perform the method of the first or second aspect.

According to a ninth aspect, there is provided a computer-readable medium comprising instructions which, when executed by a computing device, enable or cause the computing device to perform the method of the first or second aspect.

Thus provided by the present disclosure are a system that allows an expert to formally define a set of invariants that must be satisfied so that a module specification can be deemed fit for integration with a very little possibility of a failure, along with a method to validate a module specification using these invariants and to recommend a set of remedial actions against each validation error, optionally using machine learning approach.

The invention may include one or more aspects, examples or features in isolation or combination whether or not specifically disclosed in that combination or in isolation. Any optional feature or sub-aspect of one of the above aspects applies as appropriate to any of the other aspects.

These and other aspects of the invention will be apparent from and elucidated with reference to the embodiments described hereinafter.

### BRIEF DESCRIPTION OF THE DRAWINGS

A detailed description will now be given, by way of example only, with reference to the accompanying drawings, in which:-
Fig. 1 schematically illustrates a validation system according to the present disclosure;
Fig. 2 illustrates the validation system of Fig. 1 in more detail;
Fig. 3 illustrates an example model for IEC 63280 (or VDI 2658);
Fig. 4 illustrates a validation method performed by the validation system of Fig. 1; and
Fig. 5 illustrates a computing device that can be used in accordance with the systems and methods disclosed herein.

### DETAILED DESCRIPTION

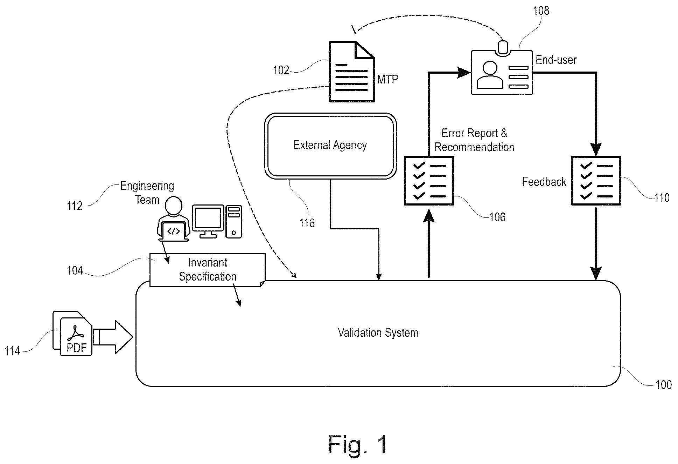

Fig. 1 schematically illustrates a validation system 100 according to the present disclosure being used to validate a module specification 102 on the basis of an invariant specification 104 and to provide an error report and a recommendation 106 of remedial action to the end user 108, who may provide feedback 110 concerning the recommendation 106. The validation system 100 allows an engineering team 112 (or other expert) to define a set of invariants to be included in the invariant specification 104. The invariants must be satisfied for the module specification 102 to be deemed fit for integration with a low possibility of failure. The invariants may be defined in such a way that compliance with at least one relevant standards specification 114 (in this example, IEC 63280) can be ensured. The validation system 100 may also refer some validation questions to an external agency 116, as described further below.

The module specification 102 in one non-limiting example takes the form of a module type package (MTP) 102, which is a file providing a standardized specification of a module in terms of one or more process functions, expressed as services. The MTP 102 conforms to the standard IEC 63280, and may therefore be provided by multiple vendors, providing the plant owner with flexibility in the choice of supplier. When a plant is designed by composing a set of modules, the engineer imports a set of MTPs, designs the plant topology in terms of the corresponding modules defined by these MTPs, and generates control code for the orchestration system. Through a simple import of the MTP into the process control engineering of the plant, the module can be integrated. This is described in the standard VDI-2658, which is now being adopted as part of IEC 63280 for automation engineering of modular systems in the process industry. The process of MTP creation and integration is, however, nonetheless error-prone. The invariant specification 104 is thus provided to allow the validation system 100 to perform a rigorous validation of the MTP 102 at the time of topology design, to ensure that it is fit for integration.

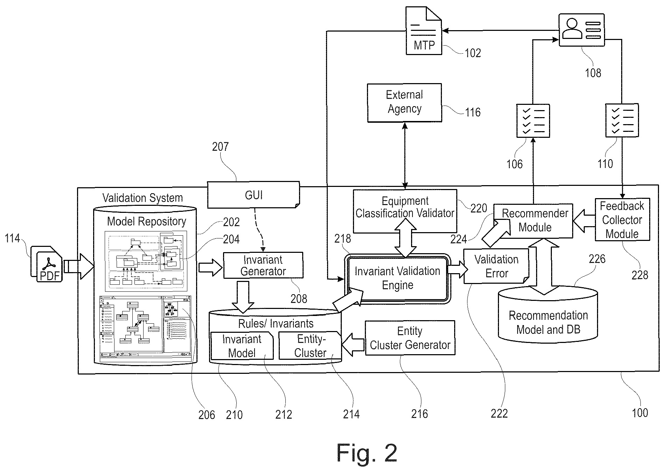

Fig. 2 illustrates the validation system 100 in more detail, including components that may be used to generate the invariant specification 104. In particular, the validation system 100 comprises an invariant generator module 208 which provides a user-friendly GUI 207 to allow the engineering team 11 to specify the invariants. The invariants can be specified in multiple ways, for example in terms of constraints based on first-order or predicate logic. Invariants can be described in many other ways. For instance, one can use assertions defined in programming languages. Invariants can be defined using equations. One can use a regular expression-based pattern to define a property that should be present. One can use a set of formulae to describe a set of invariants and one can use a SAT solver to check if these invariants are satisfied. Other techniques involve graph transformation techniques whereby the MTP 102 and its properties can be modelled as a graph and one can use a graph transformation technique to check if an MTP graph can be transformed to an ideal, correct model graph (which can be created beforehand based on the VDI-2658 specification). If the transformation fails, it can be concluded that the MTP 102 is not compliant with the VDI-2658 specification. One can use a combination of these techniques as well.

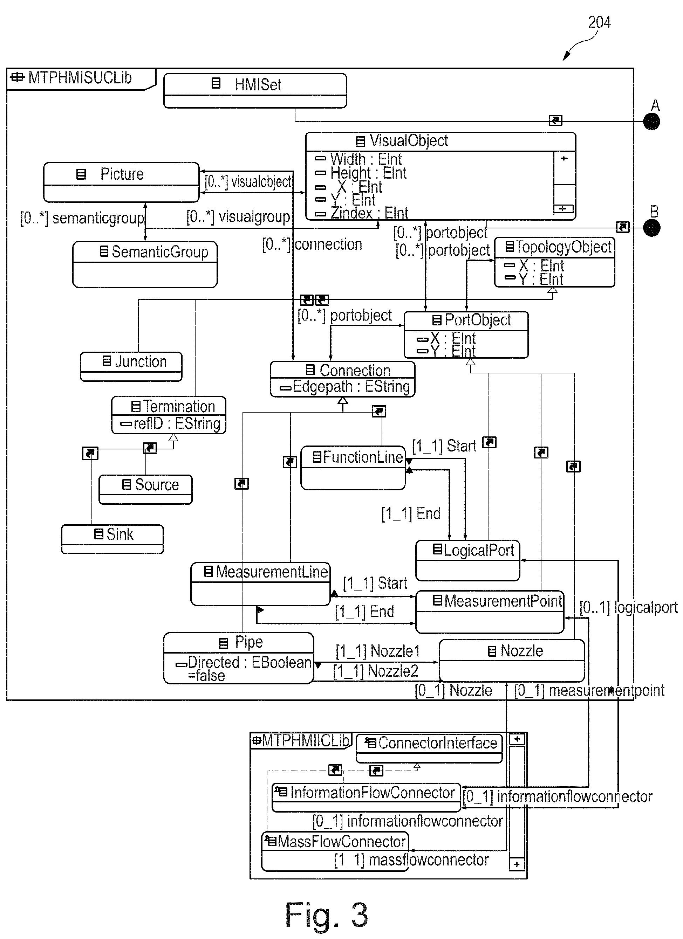

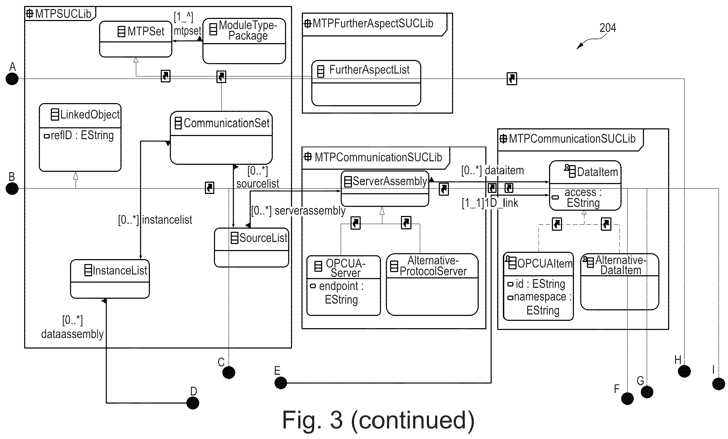

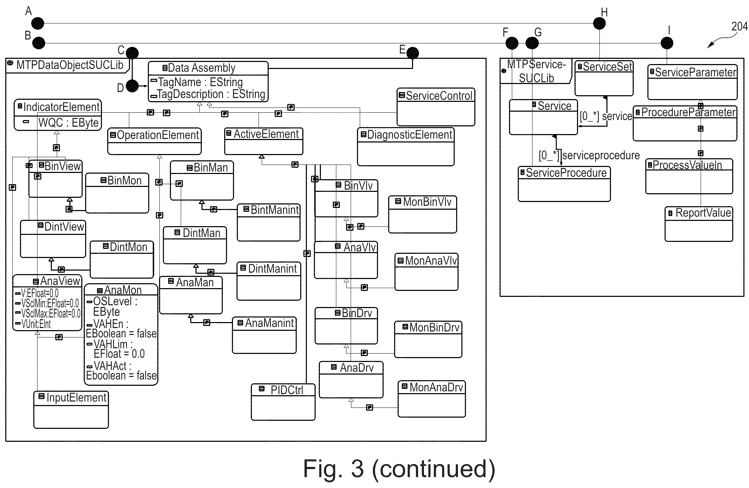

In this example, the validation system 100 enables the engineering team 112 to use a custom invariant specification language to define the set of invariants. In particular, each invariant is specified using the invariant specification language with reference to models representing the IEC 63280 standard, in particular the VDI-2658 and CAEX standards. As shown in Fig. 2, the IEC 63280 specification 114 is used to create a model 204 for the VDI-2658 specification and a metamodel 206 for the CAEX specification. The models 204, 206 are stored in a model repository 202 which is accessed by the invariant generator 208. The models 204, 206 may be created in ECORE/UML format. An example of the model 204 for the VDI-2658 specification is shown in Fig. 3. The model 204 is available with reference to the standard IEC 62424. Ed. 2.

Using the invariant specification language, variable type information is taken only from those standards. Thus, elements inside <var> are variables whose types are from elements of either the CAEX metamodel 206 or the VDI-2658 model 204. The invariants are thus tightly connected with the IEC 63280 and CAEX specifications. The semantics of MTP are defined in the VDI-2658 specification, while CAEX is mainly structural. In this way, if an invariant is defined using variables typed using the CAEX metamodel 206, the invariant will check whether a given MTP 102 conforms to the properties of the CAEX metamodel 206. This in turn ensures the structural integrity of the module specification 102. If another invariant is defined using variables typed by the VDI-2658 model, then such an invariant will check the conformance with the VDI-2658 model 204. Since VDI-2658 provides semantics to an MTP specification 102, such an invariant will check for semantic correctness.

Non-limiting examples of invariants that may be specified using the invariant generator 108 include the following, although many further examples will be apparent to the person skilled in the art.
i. Each element of the MTP 102 should be associated with a correct class hierarchy as per the VDI-2658 standard.
ii. Each property of an instance in the MTP should adhere to the VDI-2658 standard. (The terms "element" and "instance" here are general terms for everything that is in the MTP 102.)
iii. There should not be any dangling reference IDs.
iv. Value consistency constraints, for example:
   1. Each communication element should be TCP or HTTP.
   2. An attribute with a Boolean, integer or any other primitive data type should not have a GUID (Global Unique Identifier).
   3. Two ends of an internal element should be associated with external elements only.
   4. eClass values must adhere to the eClass standard.
v. P&ID (piping and instrumentation diagram) constraints, for example stating that two entities belonging to two incompatible groups should not be connected.

A first example of an invariant defined using the custom invariant definition language in XML is as follows.

```
 <inv>
     <varlist>
            <var name="il" type=" InternalLinkType" quant=forall />
            <var name="el" type=" ExternalInterfaceType" quant=exists
            />
            <var name="e2" type=" ExternalInterfaceType" quant=exists
            />
     </varlist>
     <ant>
            <and>
                    <clause relation= "=">
                           <exp name="il.left"/>
                           <exp name="el.ID" />
                    </clause>
                    <clause relation = "=">
                           <exp name="i.right"/>
                           <exp name="e2.ID" />
                    </clause>
            </and>
     </ant>
     </inv>
            
```

A second example of an invariant is as follows.

```
 <inv>
     <varlist>
            <var name="e" type="ExternalElement" quant= forall />
     </varlist>
     <implies>
            <ant>
                    <clause relation= "=">
                           <exp name="typeof(e.parent)"/>
                           <exp value="OPCUAServer" />
                    </clause>
            </ant>
     <cons>
            <clause relation= "=">
                    <exp name="typeof(e)"/>
                    <exp value="OPCUAItem" />
            </clause>
     </cons>
     </inv>
```

The first example invariant states that, for an InternalLink instance i, the properties i.left and i.right must have IDs of two ExternalElement objects. Furthermore, this must be true for all Internal Elements. Such a constraint is described as a design guideline in VDI-2658, which states that "two sides of an InternalLink must always be connected to ExternalElements". The second invariant says that, if the parent element of an ExternalElement object e is of type OPCUAServer, then the type of e is OPCUAltem. OPCUAServer and OPCUAltems are defined as two classes in the VDI 2658 model, as illustrated in Fig 3. ExternalElement is a type defined in the CAEX metamodel 206. Furthermore, the parent of an ExternalElement is defined in the CAEX metamodel 206. These two invariants exemplify how the entities of the VDI-2658 and CAEX models 204, 206 can be combined to define a rich semantic property.

It will be understood that many variations of this exemplary, non-limiting language are possible, such as variable names that are embedded inside an AND or OR clause rather than a separate <varlist>.

Once created, the invariant specification 104 is stored in XML format.. The GUI 207 assists the engineering team 112 in creating the invariants and storing them. It will be understood that the use of XML is optional and that other formats may be used, such as a JSON format where tags are made implicit.

The invariant generator module 208 compiles or interprets the invariants to produce executable rules for validating the MTP 102, and stores the executable rules as an invariant model 212 in the rules/invariants database 210. The invariant specification 104 and the invariant model 212 may be created in an offline process before being used to validate the MTP 102. Executable rules can be modelled in various ways, depending on the invariant modelling approach adopted. For the first example invariant described above, the corresponding executable rule can be implemented using C# code as follows:

```
  public class ValidateInternalLink : Rule {
      public override void Define() {
           InternalLinkType il = null;
           When ()
                .Match<InternalLinkType>(() => il)
                .And(x=>x
                .Not<ExternalInterfaceType>(e1 => e.ID.Equals(il.left))
                .Not<ExternalInterfaceType>(e2 => e.ID.Equals(il.right)));
           Then().Do(_ =>
           ValidationEngine.Instance() .ReportViolation(LogLevel.Warn, "SEMANTIC",
           "InternalLink:" + il.Name + "("+ il.ID + ") left and right sides do not match with
           any external interface"));
       }
  }
```

The rules/invariants database 210 may store further data for use in conjunction with the executable rules. For example, where an invariant relates to P&ID constraints, stating for example that two entities belonging to two incompatible groups should not be connected, data defining those groups may be stored in the database 210. To that end, as shown in Fig. 2, the validation system 100 may further comprise an entity cluster generator 216 configured to generate groups or clusters 214 of compatible elements. The entity cluster generator 216 is a heuristic driven module that takes all the entities defined in the VDI-2658 model 204 and creates a set of clusters based on certain domain specific requirements. For instance, one can define groupings based on "similar", or "compatible" elements. For instance, such a grouping can enforce that a P&ID comprising instruments and connectors must belong to the one group (or from compatible groups); it is not allowed to use instruments and connectors from multiple groups. As an example, suppose that a "Tank" and a "PID Controller" are two instances of VDI 2658 model elements. From the P&ID perspective, a PID controller and a tank cannot be connected together. The entity cluster generator 216 is configured in this case to put these two elements in two different groups. Thus, when the corresponding executable rule is executed, any connection between elements from two different groups may be reported as a violation of the P&ID constraints. Such additional constraints can be defined by the domain expert, over and above the semantic constraints imposed by VDI 2658.

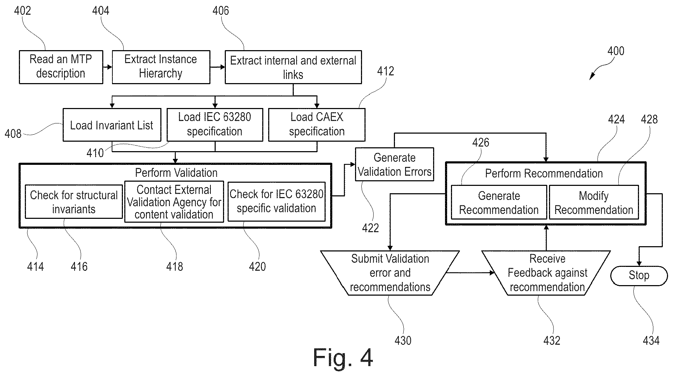

An invariant validation engine 218 of the validation system 100 receives the MTP 102 for validation and validates it, as described further below with reference to Fig. 4. In this non-limiting example, the MTP 102 is also received by an equipment classification validator module 220, which performs eClass verification in conjunction with the external agency 116, as also described below. Any validation error 222 which is detected during the validation is sent to the end user via a recommender module 224 as part of the error report 106. The validation error 222 may be provided as part of a list of validation errors.

The recommender module 224 recommends one or more remedial actions against each validation error 222. A remedial action is a corrective suggestion associated with each invariant. In one implementation, the remedial actions are predefined by domain experts and selected using a look-up technique in which corrective suggestions are stored in a recommendation database 226 against respective validation errors 222. Where multiple corrective suggestions are stored against one error 222, the recommender module 224 may select one suggestion from the list according to a score associated with that suggestion. For example, the suggestion associated with the highest score may be selected. A remedial action can be a simple, generic suggestion or can be context specific. For the first example invariant described above, possible corrective suggestions may be as follows:
1. Generic suggestion: A text message stating that "'left' and the 'right' properties of an InternalLinkType object should not be null".
2. Context specific: A text message stating that "'left' and the 'right' properties of the InternalLinkType object 'il1' should be connected to any of the ExternalInterfaces {e1, e2, e3, e4}"
3. Context specific: A text message stating that "The InternalLinkType object 'il1' is not required and should be deleted".

The feedback collector module 228 receives user feedback 110 against each recommendation and uses this feedback to improve subsequent recommendations. In particular, for the particular validation error 222, the collected feedback received in relation to each recommendation made to correct that error may be used to update the recommendation in the recommendation database 226. In the look-up example described above, the user feedback 110 may comprise a score, which is used by the feedback collector module 228 to update (e.g. to increase, decrease, or replace) the score associated with the corresponding recommendation in the recommendation database 226.

In another example, the validation system 100 may employ a machine learning approach to improve the recommendation approach over time. For example, the recommendation system (comprising components 224-228) can use a reinforcement learning approach to provide increasingly more sophisticated recommendations. The standard reinforcement learning model (as described for example at https://en.wikipedia.org/wiki/Reinforcement_learning) can be adapted for use by the recommendation system, whereby the user 108 is the environment upon which the agent, i.e., the recommendation system (224-228), acts. Validation of the MTP 102 is modelled as a collection of observations where an observation is a violation of an invariant or rule. The action is represented by the recommender module 224 providing the set of selected suggestions 106 to the user. The user can rank these suggestions 106 in the feedback 110, which can act as a reward back to the agent, or the user can modify the suggestions. Thus, the feedback 110 is modelled as a reward function. The ranking and/or modifications made by the user can be learnt by the agent and such that the next recommendation can be improved or fine tuned based on the learning.

Fig. 4 illustrates the validation method 400 carried out by the validation system 100 to perform validation and recommendation.

At step 402, the invariant validation engine 218 reads the MTP 102.

The invariant validation engine 218 extracts the instance hierarchy from the MTP 102 in step 404. The MTP 102 follows the CAEX format and thus contains a set of component instances. A component instance in turn has a set of subcomponent instances. These component-subcomponent relationships are defined using a containment hierarchy as per the CAEX specification. In the MTP 102, this instance hierarchy is described using nested XML tags.

The invariant validation engine 218 extracts the internal and external links from the MTP 102 in step 406. The MTP 102 contains a set of InternalLink and Externallnterface objects. The invariant validation engine 218 reads these specific XML tags to extract the internal and external links in step 406. In step 408, the invariant validation engine 218 loads the list of invariants from the invariant model 212 stored in the rules/invariants database 210.

In steps 410 and 412, the VDI 2658 (IEC 63280) model 204 and CAEX metamodel 206 are loaded, respectively.

Validation is performed in step 414. The validation 414 comprises one or more of a structural check 416, an external check 418, and a semantic check 420. The validation 414 can be performed in several ways and is tightly coupled with how the invariants are modelled. For instance, if the invariant is modelled as an assertion similar to a programming language, the invariant validation engine 218 can take each assertion and check if it is violated in the MTP 102. Additionally or alternatively, a similar approach can be adopted if invariants are modelled using regular expressions. One can use a regular expression to detect any unwanted pattern in the MTP 102 and report a violation. Additionally or alternatively, if the invariants are modelled as a set of formulae, performing the validation 414 can use a SAT solver such as z3 to check if the formulae are satisfiable in the MTP 102. Additionally or alternatively, the invariant validation engine in step 414 can use a graph transformation based approach to transform the MTP graph into an ideal or correct model graph. This model graph can be created as an one time activity and stored in the model repository 202. Additionally or alternatively, the validation step 414 can use an expert system based approach where the negation of an invariant is modelled as a rule. The invariant validation engine 218 serving as the expert system loads a set of facts derived from the MTP 102 (in steps 402-406). These facts contain instance hierarchy information, internal and external link information and so on. Next, the expert system fires the set of rules 210 derived from the invariant specification 104 on this fact-base. Since each rule models an "absence" of an invariant, a successful firing of a rule can point out where the invariant is violated in the MTP 102.

Step 416 validates structural invariants. The structural check is CAEX based. Using a rule-based approach, one can define a rule that detects errors in the MTP structure as per the CAEX specification (modelled using the metamodel 206). Examples of such structural errors can be: i) incorrect instance hierarchy ii) incorrect properties of a CAEX object iii) incorrect specification of internal and external elements and so on.

Step 418 checks correctness of values of the equipments defined in the MTP 102. For example, a value can be an eClassfication ID, i.e., an identifier of equipment type using a numbering system. This step is executed with the help of the equipment classification validator module 220. In step 418, 'module 220 interacts with the external validation agency 116, such as eClass portal, which provides a classification of various eClass objects and which can determine whether the classification ID is valid. Thus, the module 220 may be configured to use the eClass portal to validate eClass assignments in the MTP 102 and/or to determine whether the corresponding object fits with the rest of the MTP 102.

Step 420 involves a semantic check which checks for correctness of the MTP 102 as per VDI 2658 (IEC 63280) using the VDI-2658 model 204. In a rule based implementation approach, there can be rules that check whether there are any cases where an instance in the MTP 102 does not satisfy the constraints defined in the VDI 2658 model 204.

The list of validation errors 222 is generated in step 422. Recommendation is performed in step 424. In step 426, recommendations are generated as described above and submitted to the end user along with the error report 106 in step 430. In step 432, feedback is received against the recommendations and used to modify future recommendations by updating the recommendations database 226 in step 428. The method then stops at 434.

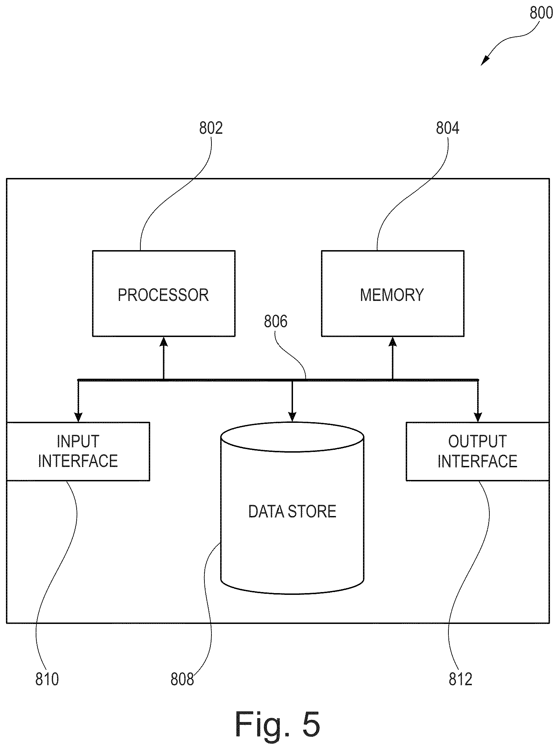

Referring now to Fig. 5, a high-level illustration of an exemplary computing device 800 that can be used in accordance with the systems and methodologies disclosed herein is illustrated. The computing device 800 may form part of or comprise any desktop, laptop, server, or cloud-based computing device. The computing device 800 includes at least one processor 802 that executes instructions that are stored in a memory 804. The instructions may be, for instance, instructions for implementing functionality described as being carried out by one or more components discussed above or instructions for implementing one or more of the methods described above. The processor 802 may access the memory 804 by way of a system bus 806. In addition to storing executable instructions, the memory 804 may also store conversational inputs, scores assigned to the conversational inputs, etc.

The computing device 800 additionally includes a data store 808 that is accessible by the processor 802 by way of the system bus 806. The data store 808 may include executable instructions, log data, etc. The computing device 800 also includes an input interface 810 that allows external devices to communicate with the computing device 800. For instance, the input interface 810 may be used to receive instructions from an external computer device, from a user, etc. The computing device 800 also includes an output interface 812 that interfaces the computing device 800 with one or more external devices. For example, the computing device 800 may display text, images, etc. by way of the output interface 812.

It is contemplated that the external devices that communicate with the computing device 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 800 may be a distributed system. Thus, for instance, several devices may be in communication by way of a network connection and may collectively perform tasks described as being performed by the computing device 800.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

It will be appreciated that the aforementioned circuitry may have other functions in addition to the mentioned functions, and that these functions may be performed by the same circuit.

It has to be noted that embodiments of the invention are described with reference to different categories. In particular, some examples are described with reference to methods whereas others are described with reference to apparatus.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The word "comprising" does not exclude other elements or steps.

The indefinite article "a" or "an" does not exclude a plurality. In addition, the articles "a" and "an" as used herein should generally be construed to mean "one or more" unless specified otherwise or clear from the context to be directed to a singular form.

A single processor or other unit may fulfil the functions of several items recited in the claims.

The mere fact that certain measures are recited in mutually different dependent claims does not indicate that a combination of these measures cannot be used advantageously.

A computer program may be stored/distributed on a suitable medium, such as an optical storage medium or a solid-state medium supplied together with or as part of other hardware, but may also be distributed in other forms, such as via the internet or other wired or wireless communications systems.

Any reference signs in the claims should not be construed as limiting the scope.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "X comprises A and/or B" is satisfied by any of the following instances: X comprises A; X comprises B; or X comprises both A and B.

## Claims

1. A computer-implemented method for validating a component specification (102) defining at least one component of an industrial automation system, wherein the component specification is arranged in an object-oriented data format, the method comprising:
obtaining an invariant specification (104) specifying one or more invariants that must be satisfied for the specification to be deemed fit for use in conjunction with the industrial automation system;
validating (414) the component specification using the invariants specified in the invariant specification; **characterized in that**:
obtaining data (214) relating to compatibility of elements in the component specification (102), wherein validating (414) the component specification comprises determining compatibility of elements in the component specification using the obtained data; and
using a clustering algorithm to obtain the data relating to compatibility of elements in the component specification.

2. The method of claim 1,
wherein at least one of the invariants relates to semantic correctness of the component specification (102), and
wherein validating (414) the component specification comprises using the said at least one invariant to validate (420) semantic correctness of the component specification.

3. The method of claim 1 or 2,
wherein at least one of the invariants relates to structural correctness of the component specification (102), and wherein validating (414) the component specification comprises using the said at least one invariant to validate (416) structural correctness of the component specification.

4. The method of any preceding claim,
wherein the component specification comprises at least one equipment classification identifier,
wherein validating (414) the component specification comprises validating (418) the at least one equipment classification identifier.

5. The method of any preceding claim,
wherein at least one of the invariants is defined with reference to a model (204) or metamodel (206) representing a relevant standard specification, and wherein validating (414) the component specification (102) comprises performing the validation with reference to the model or metamodel.

6. The method of any preceding claim,
wherein at least one of the invariants is expressed using one or more first-order logic-based constraints.

7. The method of any preceding claim, further comprising compiling the invariant specification (104) to generate at least one executable rule (210) for validation, wherein validating (414) the component specification (102) comprises executing the at least one executable rule.

8. The method of any preceding claim, further comprising, in response to detecting a validation error when validating (414) the component specification (102), recommending (424) one or more remedial actions (106) to remedy the validation error.

9. The method of claim 8, further comprising sending at least one of the recommended remedial actions (106) to a user and receiving user feedback (110) relating to the at least one recommended remedial action.

10. The method of claim 9, further comprising using the received feedback (110) to determine subsequent recommendations of remedial action (106) for the same validation error.

11. The method of claim 9 or 10, further comprising using a reinforcement learning approach to improve subsequent recommendations.

12. The method of any preceding claim, the method further comprising:
configuring the industrial automation system to operate using the component as defined by the validated component specification.

13. A validation system (100) configured to perform the method of any of claims 1 - 12.

14. A computer-readable medium (804, 808) comprising instructions which, when executed by a computing device (800), enable the computing device to carry out the method of any of claims 1 - 12.

15. A computer program product comprising instructions which, when executed by a computing device, enable or cause the computing device to perform the method of any of claims 1 - 12.

## Patentansprüche

1. Computerimplementiertes Verfahren zum Validieren einer Komponentenspezifikation (102), die wenigstens eine Komponente eines industriellen Automatisierungssystems definiert, wobei die Komponentenspezifikation in einem objektorientierten Datenformat angeordnet ist, wobei das Verfahren umfasst:
Erhalten einer Invariantenspezifikation (104), die eine oder mehrere Invarianten spezifiziert, die erfüllt sein müssen, damit die Spezifikation als für eine Verwendung in Verbindung mit dem industriellen Automatisierungssystem geeignet angesehen wird;
Validieren (414) der Komponentenspezifikation unter Verwendung der in der Invariantenspezifikation spezifizierten Invarianten; **dadurch gekennzeichnet, dass** das Verfahren umfasst:
Erhalten von Daten (214) betreffend eine Kompatibilität von Elementen in der Komponentenspezifikation (102), wobei das Validieren (414) der Komponentenspezifikation ein Bestimmen einer Kompatibilität von Elementen in der Komponentenspezifikation unter Verwendung der erhaltenen Daten umfasst; und
Verwenden eines Clustering-Algorithmus, um die Daten betreffend die Kompatibilität von Elementen in der Komponentenspezifikation zu erhalten.

2. Verfahren nach Anspruch 1,
wobei wenigstens eine der Invarianten eine semantische Korrektheit der Komponentenspezifikation (102) betrifft, und
wobei das Validieren (414) der Komponentenspezifikation ein Verwenden der wenigstens einen Invariante umfasst, um eine semantische Korrektheit der Komponentenspezifikation zu validieren (420).

3. Verfahren nach Anspruch 1 oder 2,
wobei wenigstens eine der Invarianten eine strukturelle Korrektheit der Komponentenspezifikation (102) betrifft, und wobei das Validieren (414) der Komponentenspezifikation ein Verwenden der wenigstens einen Invariante umfasst, um eine strukturelle Korrektheit der Komponentenspezifikation zu validieren (416).

4. Verfahren nach einem der vorhergehenden Ansprüche,
wobei die Komponentenspezifikation wenigstens einen Betriebsmittelklassifizierungsidentifikator umfasst,
wobei das Validieren (414) der Komponentenspezifikation ein Validieren (418) des wenigstens einen Betriebsmittelklassifizierungsidentifikators umfasst.

5. Verfahren nach einem der vorhergehenden Ansprüche,
wobei wenigstens eine der Invarianten unter Bezugnahme auf ein Modell (204) oder Metamodell (206) definiert ist, das eine relevante Standardspezifikation repräsentiert, und wobei das Validieren (414) der Komponentenspezifikation (102) ein Durchführen der Validierung unter Bezugnahme auf das Modell oder Metamodell umfasst.

6. Verfahren nach einem der vorhergehenden Ansprüche,
wobei wenigstens eine der Invarianten unter Verwendung einer oder mehrerer auf Logik erster Stufe basierender Beschränkungen ausgedrückt ist.

7. Verfahren nach einem der vorhergehenden Ansprüche, ferner umfassend ein Kompilieren der Invariantenspezifikation (104), um wenigstens eine ausführbare Regel (210) zur Validierung zu erzeugen, wobei das Validieren (414) der Komponentenspezifikation (102) ein Ausführen der wenigstens einen ausführbaren Regel umfasst.

8. Verfahren nach einem der vorhergehenden Ansprüche, ferner umfassend, als Reaktion auf ein Erfassen eines Validierungsfehlers beim Validieren (414) der Komponentenspezifikation (102), ein Empfehlen (424) einer oder mehrerer Abhilfemaßnahmen (106) zum Beheben des Validierungsfehlers.

9. Verfahren nach Anspruch 8, ferner umfassend ein Senden wenigstens einer der empfohlenen Abhilfemaßnahmen (106) an einen Benutzer und ein Empfangen von Benutzerrückmeldung (110) betreffend die wenigstens eine empfohlene Abhilfemaßnahme.

10. Verfahren nach Anspruch 9, ferner umfassend ein Verwenden der empfangenen Rückmeldung (110), um nachfolgende Empfehlungen von Abhilfemaßnahmen (106) für denselben Validierungsfehler zu bestimmen.

11. Verfahren nach Anspruch 9 oder 10, ferner umfassend ein Verwenden eines Reinforcement-Learning-Ansatzes, um nachfolgende Empfehlungen zu verbessern.

12. Verfahren nach einem der vorhergehenden Ansprüche, wobei das Verfahren ferner umfasst:
Konfigurieren des industriellen Automatisierungssystems zum Betrieb unter Verwendung der Komponente, wie durch die validierte Komponentenspezifikation definiert.

13. Validierungssystem (100), das dazu konfiguriert ist, das Verfahren nach einem der Ansprüche 1 bis 12 durchzuführen.

14. Computerlesbares Medium (804, 808), umfassend Anweisungen, die, wenn sie durch eine Rechenvorrichtung (800) ausgeführt werden, die Rechenvorrichtung dazu befähigen, das Verfahren nach einem der Ansprüche 1 bis 12 auszuführen.

15. Computerprogrammprodukt, umfassend Anweisungen, die, wenn sie durch eine Rechenvorrichtung ausgeführt werden, die Rechenvorrichtung dazu befähigen oder veranlassen, das Verfahren nach einem der Ansprüche 1 bis 12 durchzuführen.

## Revendications

1. Procédé mis en œuvre par ordinateur pour valider une spécification de composant (102) définissant au moins un composant d'un système d'automatisation industrielle, dans lequel la spécification de composant est agencée dans un format de données orienté objet, le procédé comprenant :
l'obtention d'une spécification d'invariants (104) spécifiant un ou plusieurs invariants qui doivent être satisfaits pour que la spécification soit jugée apte à être utilisée conjointement au système d'automatisation industrielle ;
la validation (414) de la spécification de composant à l'aide des invariants spécifiés dans la spécification d'invariants ; **caractérisé en ce que** :
l'obtention de données (214) concernant la compatibilité d'éléments dans la spécification de composant (102), dans lequel la validation (414) de la spécification de composant comprend la détermination de la compatibilité d'éléments dans la spécification de composant à l'aide des données obtenues ; et
l'utilisation d'un algorithme de regroupement pour obtenir les données concernant la compatibilité d'éléments dans la spécification de composant.

2. Procédé selon la revendication 1,
dans lequel au moins l'un des invariants concerne l'exactitude sémantique de la spécification de composant (102), et
dans lequel la validation (414) de la spécification de composant comprend l'utilisation dudit au moins un invariant pour valider (420) l'exactitude sémantique de la spécification de composant.

3. Procédé selon la revendication 1 ou la revendication 2,
dans lequel au moins un des invariants concerne l'exactitude structurelle de la spécification de composant (102), et dans lequel la validation (414) de la spécification de composant comprend l'utilisation dudit au moins un invariant pour valider (416) l'exactitude structurelle de la spécification de composant.

4. Procédé selon l'une quelconque des revendications précédentes,
dans lequel la spécification de composant comprend au moins un identifiant de classification d'équipement,
dans lequel la validation (414) de la spécification de composant comprend la validation (418) de l'au moins un identifiant de classification d'équipement.

5. Procédé selon l'une quelconque des revendications précédentes,
dans lequel au moins un des invariants est défini en référence à un modèle (204) ou métamodèle (206) représentant une spécification standard pertinente, et
dans lequel la validation (414) de la spécification de composant (102) comprend la réalisation de la validation en référence au modèle ou métamodèle.

6. Procédé selon l'une quelconque des revendications précédentes,
dans lequel au moins un des invariants est exprimé à l'aide d'une ou de plusieurs contraintes basées sur une logique du premier ordre.

7. Procédé selon l'une quelconque des revendications précédentes, comprenant en outre la compilation de la spécification d'invariants (104) pour générer au moins une règle exécutable (210) pour validation, dans lequel la validation (414) de la spécification de composant (102) comprend l'exécution de l'au moins une règle exécutable.

8. Procédé selon l'une quelconque des revendications précédentes, comprenant en outre, en réponse à la détection d'une erreur de validation lors de la validation (414) de la spécification de composant (102), la recommandation (424) d'une ou de plusieurs actions correctives (106) pour corriger l'erreur de validation.

9. Procédé selon la revendication 8, comprenant en outre l'envoi d'au moins une des actions correctives (106) recommandées à un utilisateur et la réception d'un retour utilisateur (110) concernant l'au moins une action corrective recommandée.

10. Procédé selon la revendication 9, comprenant en outre l'utilisation du retour reçu (110) pour déterminer des recommandations ultérieures d'action corrective (106) pour la même erreur de validation.

11. Procédé selon la revendication 9 ou la revendication 10, comprenant en outre l'utilisation d'une approche d'apprentissage par renforcement pour améliorer les recommandations ultérieures.

12. Procédé selon l'une quelconque des revendications précédentes, le procédé comprenant en outre :
la configuration du système d'automatisation industrielle pour qu'il fonctionne à l'aide du composant tel que défini par la spécification de composant validée.

13. Système de validation (100) configuré pour réaliser le procédé selon l'une quelconque des revendications 1 à 12.

14. Support lisible par ordinateur (804, 808) comprenant des instructions qui, lorsqu'elles sont exécutées par un dispositif informatique (800), permettent au dispositif informatique d'effectuer le procédé selon l'une quelconque des revendications 1 à 12.

15. Produit-programme d'ordinateur comprenant des instructions qui, lorsqu'elles sont exécutées par un dispositif informatique, permettent au ou amènent le dispositif informatique à réaliser le procédé selon l'une quelconque des revendications 1 à 12.
